# EUROPÄISCHE PATENTSCHRIFT

(11) **EP 1 620 717 B1**
(45) Veröffentlichungstag und Bekanntmachung des Hinweises auf die Patenterteilung: **05.12.2007**
(21) Anmeldenummer: 05715724.0
(22) Anmeldetag: 04.03.2005
(51) Int. Cl.: G01N 27/414

(54) **VORRICHTUNG ZUR DETEKTION EINES GASES ODER GASGEMISCHS**
DEVICE FOR DETECTING A GAS OR GAS MIXTURE
DISPOSITIF DE DETECTION D'UN GAZ OU D'UN MELANGE GAZEUX

(30) Priorität: 18.03.2004 DE 102004013678
(43) Veröffentlichungstag der Anmeldung: 01.02.2006
(73) Patentinhaber: Micronas GmbH, 79008 Freiburg (DE)
(72) Erfinder: LEHMANN, Mirko Dr. rer. nat., 79117 Freiburg (DE); FRERICHS, Heinz-Peter Dr., 79271 St.Peter (DE); WILBERTZ, Christoph Dr., 79194 Gundelfingen (DE)
(74) Vertreter: Huwer, Andreas
(86) Internationale Anmeldenummer: PCT/EP2005/002283
(87) Internationale Veröffentlichungsnummer: WO 2005/093399

(56) Entgegenhaltungen:
- WO-A-03/050526
- DE-A1- 10 036 178
- US-A- 4 650 561
- US-A- 4 730 479
- US-A1- 2002 170 824
- EISELE I ET AL: "Low power gas detection with FET sensors" SENSORS AND ACTUATORS B, ELSEVIER SEQUOIA S.A., LAUSANNE, CH, Bd. 78, Nr. 1-3, 30. August 2001 (2001-08-30), Seiten 19-25, XP004297630 ISSN: 0925-4005
- EISELE I ET AL: "Work function based field effect devices for gas sensing" OPTOELECTRONIC AND MICROELECTRONIC MATERIALS AND DEVICES, 2000. COMMAD 2000. PROCEEDINGS CONFERENCE ON 6 - 8 DEC 2000, PISCATAWAY, NJ, USA,IEEE, 6. Dezember 2000 (2000-12-06), Seiten 285-291, XP010596262 ISBN: 0-7803-6698-0
- T. DOLL, I. ISELE: "Gas detection with work function sensors" PROC. SPIE CONFERENCE ON CHEMICAL MICROSENSORS AND APPLICATIONS, Bd. 3539, November 1998 (1998-11), Seiten 96-105, XP002329891 BOSTON, USA
- P. BERGVELD, J. HENDRIKSE, W. OLTHUIS: "Theory and application of the material work function for chemical sensors based on the field effect principle" MEAS. SCI. TECHNOL., Bd. 9, 1998, Seiten 1801-1808, XP002329892 UK
- LUNDSTROM I ET AL: "A hydrogen-sensitive MOS field-effect transistor" APPLIED PHYSICS LETTERS, AMERICAN INSTITUTE OF PHYSICS. NEW YORK, US, Bd. 26, Nr. 2, 15. Januar 1975 (1975-01-15), Seiten 55-57, XP002086960 ISSN: 0003-6951

## Beschreibung

Die Erfindung betrifft eine Vorrichtung zur Detektion eines Gases oder Gasgemischs.

Eine Vorrichtung zur Detektion von Wasserstoffgas ist aus DE 43 33 875 C2 bekannt. Sie weist als Gassensor einen so genannten Lundström-Feldeffekttransistor auf Der Lundström-FET hat eine gassensitive Schicht die über eine elektrische Isolationsschicht kapazitiv an den Kanalbereich des FET gekoppelt ist. Die Wirkungsweise des Lundström-FET besteht darin, dass abgespaltene oder aus der Umgebung adsorbierte Wasserstoffatome an die Grenzfläche zwischen der gassensitiven Schicht und der Isolationsschicht gelangen, dort polarisiert werden und zu einer Änderung der Schwellenspannung des FET führen. Nachteilig ist dabei jedoch, dass die Wasserstoffatome, um an die Isolationsschicht zu gelangen, durch die gassensitive Schicht hindurch diffundieren müssen. Der Lundström-FET weist deshalb noch vergleichsweise große Ansprechzeiten auf Die Ansprechzeit kann zwar dadurch reduziert werden, dass der Lundström-FET beheizt wird, jedoch erfordert dies eine nicht unerhebliche Energieaufnahme. Außerdem hat auch der Lundström-FET eine gewisse Empfindlichkeit für andere Gase als Wasserstoff.

Aus DE 43 33 875 C2 kennt man auch bereits eine Vorrichtung zur Detektion von Wasserstoffgas, die einen nach dem Prinzip des Suspended Gate Feldeffekttransistors (SGFET) aufgebauten Gassensor mit einer gassensitiven Schicht aufweist, die über einen Luftspalt kapazitiv an einen zwischen einem Source- und einem Drain-Bereich angeordneten Kanalbereich gekoppelt ist. Die gassensitive Schicht reagiert bei einem Kontakt mit Wasserstoffgas mit einer Änderung ihrer Austrittsarbeit, wodurch an der Oberfläche der Schicht eine elektrische Spannung induziert wird, die über den Kanalbereich den Stromfluss zwischen dem Source- und Drain-Bereich steuert. Die gassensitive Schicht ist jedoch außer für Wasserstoffgas auch für bestimmte andere Gase empfindlich. In Umgebungen, in denen diese Gase auftreten können, kann es deshalb zu Ungenauigkeiten bei der Detektion von Wasserstoffgas kommen. Dies ist beispielsweise bei der Detektion von Leckstellen in der Wasserstoffversorgung von Kraftfahrzeugen problematisch, die als Antrieb eine Wasserstoff-Brennstoffzelle aufweisen. Da Wasserstoffgas bei einem Kontakt mit Luftsauerstoff hochexplosiv ist, muss ein bestehendes Leck möglichst frühzeitig erkannt werden, um die Wasserstoffzufuhr sperren und/oder den Benutzer des Fahrzeugs warnen zu können, bevor eine kritische Wasserstoffkonzentration in der Umgebungsluft überschritten wird. Andererseits sollen aber Fehlalarme, die durch die Querempfindlichkeit des Gassensors gegenüber anderen Gasen auftreten, unter allen Umständen vermieden werden, da derartige Fehlalarme die Sperrung der Wasserstoffzufuhr auslösen und somit zu einem Ausfall des Antriebs des Kraftfahrzeugs führen können.

Aus WO 03/050526 C2 ist ferner eine Vorrichtung zur Detektion eines Gases bekannt, die als Gassensor einen SGFET mit einer gassensitiven Schicht aus Platin aufweist. Zusätzlich dazu weist die Vorrichtung eine zweiten, zur Temperaturreferenzierung dienenden SGFET auf, der anstelle der gassensitiven Platin-Schicht eine nicht-sensitive Titanschicht hat. Beide SGFETs sind mit einer Auswerteeinrichtung verbunden, die derart ausgebildet ist, dass sie zur Detektion des Gases die Messsignale beider Arten von Gassensoren auswertet. Auch bei dieser Vorrichtung ist die gassensitive Schicht für mehrere unterschiedliche Gase empfindlich. In Umgebungen, in denen diese Gase gleichzeitig auftreten können, kann es deshalb zu Messungenauigkeiten kommen.

In US 4 730 479 ist ein wasserstoffempfindlicher SGFET offenbart, bei dem der Temperaturausgleich durch einen gasunempfindlichen MOSFET und der Feuchteausgleich durch einen SGFET mit einer goldenen Gateelektrode durchgeführt wird.

Aus US 4 650 561 A1 ist ein Ammoniak Sensor mit zwei FETs mit Platin-Gateelektrode bekannt. Die unterschiedliche Sensitivität der FETs, die beide das gleiche Gate-Material aufweisen, wird durch unterschiedliche Herstellungsverfahren erzielt, nämlich CVD und Sputtern.

In US 2002/170824 A1 ist eine Vorrichtung zur Detektion eines Gases beschrieben, die zwei SG-FETs aufweist, bei denen die Kanalbereiche in unterschiedlichen Abständen zu dem Suspended Gate angeordnet sind. Nach Angabe der Patentschrift wird durch diese Maßnahme der Einfluss von Temperaturschwankungen auf das Gas-Messsignal abgeschwächt.

Es besteht deshalb die Aufgabe, eine Vorrichtung der eingangs genannten Art zu schaffen, die es ermöglicht, ein Gas mit großer Präzision und Zuverlässigkeit zu detektieren.

Diese Aufgabe wird mit den Merkmalen des Anspruchs 1 gelöst. Der Erfindung liegt die Erkenntnis zugrunde, dass der MOSFET und der SGFET unterschiedliche Detektionseigenschaften für Gase haben, und dass durch die scheinbar unnötige Kombination dieser beiden Arten von Gassensoren und die Auswertung der unterschiedlichen Messsignale dieser Gassensoren das Gas mit einer wesentlich größeren Genauigkeit detektiert werden kann als mit einer Vorrichtung, die nur ein Art von Gassensoren aufweist. Insbesondere ermöglicht die erfindungsgemäße Vorrichtung eine sehr geringere Querempfindlichkeit gegenüber anderen Gasen als das zu detektierende Gas, da der SGFET und der Lundström-FET (MOS-FET) für die Gase unterschiedliche Empfindlichkeiten aufweisen, so dass durch einen Vergleich der Messsignale der beiden Arten von Gassensoren bei den bei der Leckageüberprüfung in einem Kraftfahrzeug in der Praxis auftretenden Fällen erkennbar ist, ob und gegebenenfalls in welchem Umfang die Messsignale durch das zum Betrieb des Kraftfahrzeugs verwendete Gas und/oder mindestens ein anderes Gas induziert wurden.

Bei der einer zweckmäßigen Ausführungsform der Erfindung weist der MOSFET auf dem Substrat eines Halbleiterchips eine erste Drain und eine erste Source auf, zwischen denen der erste Kanalbereich gebildet ist, wobei die erste gassensitive Schicht über eine dielektrische Schicht kapazitiv an den ersten Kanalbereich gekoppelt ist, wobei der SGFET auf dem Substrat seitlich neben dem MOSFET eine zweite Drain und eine zweite Source aufweist, zwischen denen der zweite Kanalbereich gebildet ist, und über einen Luftspalt kapazitiv an den zweiten Kanalbereich gekoppelt ist. Dabei ist es sogar möglich, dass die zweite gassensitive Schicht mit einer Änderung ihrer Austrittsarbeit auf eine Änderung der Konzentration eines sich von dem zu detektierenden Gases unterscheidenden Gases, für das der Lundström-FET eine Querempfindlichkeit aufweist, reagiert. Die Auswerteeinrichtung kann dann derart ausgebildet sein, dass sie zur Kompensation der Querempfindlichkeit die Messsignale beider Arten von Gassensoren auswertet. Die dielektrische Schicht besteht vorzugsweise aus SiO₂, Si₃N₄, Al₂O₃ oder einem Mischoxid aus diesen Stoffen.

Durch die in Anspruch 3 beschriebenen Ausgestaltung der Erfindung wird einerseits eine kompakte und kostengünstige Vorrichtung ermöglicht und andererseits wird durch die räumlich dichte Anordnung der unterschiedlichen Arten von Gassensoren sichergestellt, dass das Gas, mit dem die einzelnen Gassensoren in Kontakt kommen, dieselbe Zusammensetzung aufweist. Außerdem wird durch die Integration der Gassensoren in den Halbleiterchip erreicht, dass die einzelnen Gassensoren dieselbe Temperatur aufweisen. Die Vorrichtung ermöglicht dadurch eine noch größere Messgenauigkeit und Zuverlässigkeit bei der Gasdetektion.

Vorzugsweise besteht die zweite gassensitive Schicht aus Palladium und/oder Platin und/oder einer mindestens eines dieser Metalle enthaltenden Legierung. Mit diesen Werkstoffen lässt sich eine besonders hohe Detektionsempfindlichkeit für Wasserstoffgas erreichen. Auch Ammoniak (NH₃) und/oder Stickstoffdioxid (NO₂) oder ein Gasgemisch, das Wasserstoffgas, Ammoniak und/oder Stickstoffdioxid enthält, kann (können) mit der erfindungsgemäßen Vorrichtung gemessen werden.

Bei einer Ausgestaltung der Erfindung ist das Suspended Gate seitlich bis über den MOSFET verlängert und überdeckt diesen vorzugsweise vollständig. Die Vorrichtung lässt sich dann mit an sich bekannten Methoden der Halbleiterfertigung besonders einfach und kostengünstig herstellen.

Bei einer bevorzugten Ausführungsform der Erfindung ist mit der Auswerteeinrichtung mindestens ein vorzugsweise auf dem Halbleiterchip integriertes elektrisches Widerstandselement verbunden, das aus einem Werkstoff besteht, dessen elektrischer Widerstandswert von der Wasserstoffgaskonzentration abhängig ist, wobei die Auswerteeinrichtung derart ausgebildet ist, dass sie zur Detektion des Wasserstoffgases ein Messsignal des Widerstandselements auswertet. Dabei besteht das Widerstandselement bevorzugt aus einer Palladium-Nickel-Legierung, deren spezifischer elektrischer Widerstand sich etwa proportional zur Wasserstoffgaskonzentration in der Umgebung des Widerstandselements verhält. Das Widerstandselement ist bevorzugt als dünne Schicht ausgebildet. Es kann als Gate-Elektrode auf dem Kanalbereich eines Feldeffekttransistors (FET) angeordnet sein. Das Widerstandselement ermöglicht es, Wasserstoffkonzentrationen in einem Bereich von etwa 0,5% bis 100% zu messen. In der Auswerteeinrichtung werden die Messsignale des SGFET, des Lundström-FET und des Widerstandselements und somit von drei unterschiedlichen Arten von Gassensoren zur Detektion des Wasserstoffgases bzw. zur Erzeugung eines Messsignals für die Wasserstoffkonzentration ausgewertet und ggf miteinander verknüpft.

Vorteilhaft ist, wenn auf dem Halbleiterchip eine elektrische Heizung integriert ist. Der Lundström-FET kann dann beheizt werden, um die Diffusion des zu detektierenden Gases in die zweite gassensitive Schicht zu beschleunigen und somit die Reaktionszeit des Messsignals des Lundström-FET auf eine Veränderung der Gaskonzentration zu reduzieren. Die Heizung kann auch zum Beheizen des Widerstandselements dienen.

Vorteilhaft ist, wenn das Substrat vorzugsweise an seiner den gassensitiven Schichten abgewandten Rückseite mindestens eine vorzugsweise grabenförmige Vertiefung aufweist, die derart relativ zu der Heizung angeordnet ist, dass sie die Wärmeableitung von der Heizung in seitlicher Richtung reduziert. Die Vertiefung kann ring- oder rahmenförmig um die Heizung bzw. den die Heizung aufweisenden Bereich des Halbleiterchips umlaufen. Es ist aber auch denkbar, dass die Vertiefung flächig ausgebildet ist und sich gegebenenfalls über die gesamte Grundfläche des Substrats erstreckt. Bei der Fertigung des Halbleiterchips werden zunächst der mindestens einen Lundström-FET, der wenigstens einen SGFET und ggf die Auswerteeinrichtung auf dem Substrat erzeugt und dann wird das Substrat vorzugsweise von der Rückseite her bereichsweise abgetragen wird, beispielsweise mit Hilfe eines Ätzprozesses. Im Bereich der Vertiefung kann die Dicke des Substrats kleiner als 70 µm und bevorzugt kleiner als 50 µm sein. Aufgrund der Vertiefung weist der Halbleiterchip einerseits eine geringe Wärmeableitung in seitlicher Richtung auf und andererseits wird durch die Vertiefung aber auch die Wärmekapazität des Halbleiterchips reduziert.

Bei einer vorteilhaften Ausgestaltung der Erfindung ist in den Halbleiterchip ein mit der Auswerteeinrichtung verbundener Temperatursensor integriert, wobei die Auswerteeinrichtung derart ausgebildet ist, dass die Gasdetektion in Abhängigkeit von dem Messsignal des Temperatursensors erfolgt. Dadurch ist es insbesondere möglich, die Temperaturabhängigkeit des Source-Drain-Stroms der Feldeffekttransistoren zu kompensieren, was insbesondere vorteilhaft ist, da mindestens ein Gassensor einen MOSFET ist.

Bei einer bevorzugten Ausführungsform der Erfindung ist die Auswerteeinrichtung derart ausgebildet, dass sie ein Differenzsignal und/oder ein Summensignal aus den Messsignalen der beiden Arten von Gassensoren bildet, wobei die Gasdetektion in Abhängigkeit von dem Differenz- und/oder Summensignal erfolgt. Anhand des Differenzsignals können Messsignalanteile ermittelt werden, die durch andere Gase als das zu detektierende Gas induziert werden, sofern die beiden Arten von Gassensoren für diese Gase eine unterschiedliche Querempfindlichkeit aufweisen.

Die Auswerteeinrichtung kann derart ausgestaltet sein, dass sie bei der Gasdetektion das Vorzeichen bzw. die Polarität und/oder den Betrag des Differentialsignals berücksichtigt. Anhand des Vorzeichens lassen sich insbesondere Messsignale oder Messsignalanteile bestimmen, die durch Gase induziert sind, die bei den beiden Arten von Gassensoren Veränderungen in den Messsignalen bewirken, die in zueinander entgegengesetzte Richtungen orientiert sind.

Besonders vorteilhaft ist, wenn die Auswerteeinrichtung derart ausgebildet ist, dass sie ein Quotientensignal aus den Messsignalen der beiden Arten von Gassensoren bildet, und wenn die Gasdetektion in Abhängigkeit von dem Quotientensignal erfolgt. Das Differenzsignal kann dann mit mindestens einem vorgegebenen Wert oder Wertebereich verglichen werden, um die Anwesenheit eines dem vorgegebenen Wert oder Wertebereich zugeordneten Querempfindlichkeitsgases festzustellen. Beim Detektieren eines solchen Gases kann das Messsignal des Gassensors einer vorbestimmten, dem Querempfindlichkeitsgas zugeordneten Gassensorsart nicht oder nur in abgeschwächter Form bei der Auswertung berücksichtigt und die Gasdetektion bzw. die Messung der Gaskonzentration überwiegend oder ausschließlich mit Hilfe des Messsignals des Gassensors der anderen Gassensorart durchgeführt werden.

Bei einer bevorzugten Ausführungsform der Erfindung ist die Vorrichtung mit Hilfe einer Schalteinrichtung zwischen einem Arbeitszustand und einem Energiesparzustand umschaltbar, wobei im Energiesparzustand die Heizung und gegebenenfalls der MOSFET ausgeschaltet sind, und wobei die Auswerteeinrichtung derart ausgebildet ist, dass sie im Energiesparzustand zur Detektion des Gases vorzugsweise nur das Messsignal des SGFET auswertet. Bei einer Vorrichtung zur Detektion eines Lecks in der Wasserstoffversorgung eines Kraftfahrzeugs kann die Umschaltung zwischen dem Arbeits- und dem Energiesparzustand in Abhängigkeit vom Betriebszustand des Kraftfahrzeugs erfolgen. Dabei ist der Arbeitszustand bevorzugt bei eingeschalteter Brennstoffzelle aktiviert, um eine möglichst genaue Leckerkennung zu ermöglichen, während der Energiesparzustand bei abgeschalteter Brennstoffzelle aktiviert ist, um die Batterie des Kraftfahrzeugs zu schonen.

Gegebenenfalls ist es sogar möglich, dass die Schalteinrichtung derart ausgebildet ist, dass sie von dem Arbeitszustand in den Energiesparzustand umschaltet, wenn die gemessene Gaskonzentration einen vorgegebenen Vergleichswert überschreitet, und dass die Schalteinrichtung gegebenenfalls von dem Energiesparzustand in den Arbeitszustand zurückschaltet, wenn die gemessene Gaskonzentration den vorgegebenen Vergleichswert unterschreitet. Dabei wird davon ausgegangen, dass der SGFET eine höhere Gaskonzentration messen kann als der Lundström- oder MOSFET. Der vorgegebene Vergleichswert ist vorzugsweise so gewählt, dass er etwa mit der Konzentration des zu detektierenden Gases übereinstimmt, die maximal mit dem Lundström-FET gemessen werden kann. Somit werden bei hohen Gaskonzentrationen Messfehler durch die Begrenzung des Messbereichs des Lundström-FET vermieden und außerdem wird die Energieaufnahme der Vorrichtung reduziert.

Vorteilhaft ist, wenn die Auswerteeinrichtung mit der Schalteinrichtung derart in Steuerverbindung steht, dass sie im Energiesparzustand beim Auftreten eines für die Anwesenheit des zu detektierenden Gases typischen Messsignalabschnitts in dem Messsignal des SGFET die Schalteinrichtung in den Arbeitszustand umschaltet und gegebenenfalls, falls kein solcher Messsignalabschnitt mehr detektiert wird, die Schalteinrichtung in den Energiesparzustand zurückschaltet. Wenn der SGFET im Energiesparzustand ein Messsignal detektiert, das im Verdacht steht, durch das zu detektierende Gas verursacht zu sein, werden also die Heizung und ggf. der Lundström-FET zugeschaltet, um anschließend mit Hilfe der Messsignale der beiden Arten von Gassensoren eine genauere Messung der Gaskonzentration vorzunehmen. Wenn sich dabei der Verdacht, dass eine unzulässig hohe Konzentration des Gases vorhanden ist, bestätigt, kann ggf. ein Alarm ausgelöst und/oder die Gaszufuhr gesperrt werden. Die Vorrichtung ermöglicht also trotz eines geringen Energieverbrauchs eine zuverlässige und präzise Gasdetektion, insbesondere von Wasserstoffgas.

Nachfolgend ist ein Ausführungsbeispiel der Erfindung anhand der Zeichnung näher erläutert. Es zeigen:
- Fig. 1: einen Querschnitt durch einen Halbleiterchip, auf dem als Wasserstoffsensoren ein Lundström-FET und ein SG-FET integriert sind,
- Fig. 2: eine graphische Darstellung der Messsignale des SGFET und des Lundström-FET in Abhängigkeit von der Wasserstoffgaskonzentration, wobei auf der Abszisse die Zeit t in Stunden und auf der Ordinate links die Änderung der Austrittsarbeit €φ in eV und rechts die Konzentration C des Wasserstoffgases in ppm aufgetragen sind,
- Fig. 3: eine Darstellung ähnlich Fig. 2, wobei jedoch anstelle der Wasserstoffgaskonzentration auf der Ordinate die Ammoniakgaskonzentration aufgetragen ist, und
- Fig. 4: eine Darstellung ähnlich Fig. 2, wobei jedoch anstelle der Wasserstoffgaskonzentration auf der Ordinate die CH₄-Gaskonzentration aufgetragen ist.

Eine Vorrichtung zur Detektion eines Gases, nämlich Wasserstoff, beispielsweise in einem mit einem Wasserstoffantrieb ausgestatteten Kraftfahrzeug, weist zwei Arten von Gassensoren auf, nämlich einen SGFET 1 und einen MOSFET 2. Der SGFET 1 und der MOSFET 2 sind mit einer in der Zeichnung nicht näher dargestellten Auswerteeinrichtung verbunden, die derart ausgebildet ist, dass sie durch Verarbeitung der Messsignale beider Arten von Gassensoren die Konzentration von in der Umgebung der Gassensoren befindlichem Wasserstoffgas ermittelt.

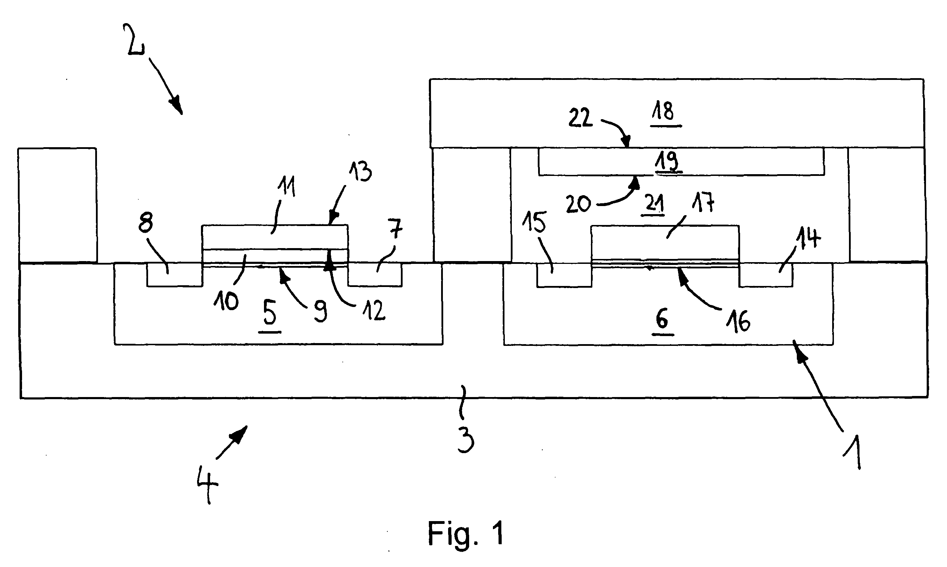

In Fig. 1 ist erkennbar, dass der SGFET 1 und der MOSFET 2 auf einem Substrat 3 eines im Ganzen mit 4 bezeichneten Halbleiterchips integriert sind. Deutlich ist erkennbar, dass in die Oberfläche des Substrats 3 wannenförmige Zonen eines ersten Ladungsträgertyps eingelassen sind, so genannte Wells 5, 6.

In einem in der linken Hälfte von Fig. 1 abgebildeten ersten Well 5 sind eine erste Drain 7 und eine erste Source 8 für den MOSFET 2 angeordnet, die durch Bereiche gebildet sind, die mit Ladungsträgern eines zweiten Ladungsträgertyps dotiert sind. Zwischen der ersten Drain 7 und der ersten Source 8 ist ein erster Kanalbereich 9 angeordnet, auf dem eine dielektrische Schicht 10 und auf dieser eine erste gassensitive Schicht 11 vorgesehen sind, die aus Palladium und/oder einer Palladium-Legierung besteht.

Die an die dielektrische Schicht 10 angrenzende ßegrenzungsfläche 12 der ersten gassensitiven Schicht 11 ist über die dielektrische Schicht 10 kapazitiv an den ersten Kanalbereich 9 gekoppelt. Die erste gassensitive Schicht 11 ist mit dem Anschluss für das Bezugspotential elektrisch verbunden. An einer freiliegenden Oberfläche 13 der ersten gassensitiven Schicht 11 kann sich Wasserstoff anlagern und durch die Schicht 11 hindurch zu der Begrenzungsfläche 12 diffundieren.

Seitlich neben dem ersten Well 5 ist ein zweites Well 6 in die Oberfläche des Substrats 3 eingelassen, in dem eine zweite Drain 14 und eine zweite Source 15 für den SGFET 1 angeordnet sind. Zwischen der zweiten Drain 14 und der zweiten Source 15 ist ein zweiter Kanalbereich 16 gebildet, auf dem eine dünne Isolationsschicht und auf dieser eine Gate-Elektrode 17 vorgesehen sind.

An der dem Substrat 3 abgewandten Seite des zweiten Kanalbereichs 16 ist an einem den Kanalbereich 16 brückenförmig überspannenden Suspended Gate 18 eine dem Kanalbereich 16 zugewandte zweite gassensitive Schicht 19 angeordnet. Die zweite gassensitive Schicht 19 besteht aus Palladium, Platin und/oder einer mindestens eines dieser Metalle enthaltenden Legierung und reagiert auf eine Veränderung der Wasserstoffgaskonzentration mit einer Änderung ihrer Austrittsarbeit. Die gassensitive Schicht 19 ist mit ihrer dem zweiten Kanalbereich 16 zugewandten flachseitigen Oberfläche 20 über einen zur Umgebung hin offenen Luftspalt 21 kapazitiv an den zweiten Kanalbereich 16 gekoppelt. An seiner von der Oberfläche 20 abgewandten Rückseite 22 ist die gassensitive Schicht 19 über eine in der Zeichnung nicht näher dargestellte Leiterbahn mit einem Bezugspotentialanschluss verbunden, an dem ein definiertes elektrisches Potential anliegt.

Die Source-Drain-Strecke des SGFET 1 ist mit einem ersten Messsignaleingang und die Source-Drain-Strecke des MOSFET 2 mit einem zweiten Messsignaleingang der Auswerteeinrichtung verbunden. In der Auswerteeinrichtung werden die Messsignale der beiden unterschiedlichen Arten von Gassensoren zunächst mit Hilfe von zuvor abgespeicherten Kenngrößen kalibriert, um eventuelle Fertigungstoleranzen insbesondere der geometrischen Abmessungen der Gassensoren auszugleichen. Die auf diese Weise kalibrierten Messsignale werden untereinander und mit gespeicherten Referenzwerten verglichen und in Abhängigkeit vom Ergebnis dieses Vergleichs wird an einem Ausgangsanschluss der Auswerteeinrichtung ein Alarmsignal generiert, das anzeigt, ob in der Umgebung der Gassensoren Wasserstoffgas vorhanden ist.

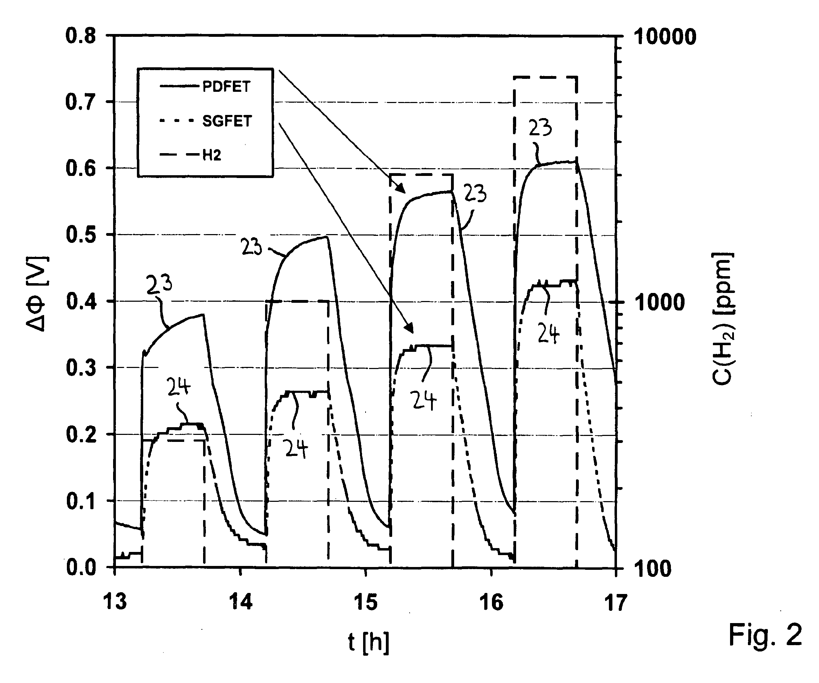

In Fig. 2 ist erkennbar, dass bei einem Kontakt der Gassensoren mit Wasserstoffgas das Messsignal 23 des MOSFET 2 betragsmäßig größer ist als das Messsignal 24 des SGFET 1. Dabei beträgt der Quotient aus dem Messsignal 23 des MOSFET 2 und dem Messsignal 24 des SGFET 1 etwa 1:1,4. Außerdem ist erkennbar, dass die Messsignale beider Arten von Gassensoren ein etwa gleichschnelles Ansprechverhalten zeigen. In Fig. 2 ist die Konzentration des Wasserstoffgases strichliniert dargestellt. Deutlich ist erkennbar, dass der Verlauf der Wasserstoffgas-Konzentration mehrere rechteckförmige Pulse aufweist, die durch Pulspausen voneinander beabstandet sind, in denen die Wasserstoffgas-Konzentration etwa gleich Null ist. In den Pulspausen fallen die Messsignale 23, 24 beider Arten von Gassensoren jeweils ab, wobei die Steilheit des Abfalls, jeweils ausgehend vom Beginn der betreffenden Pulspause zum Ende der Pulspause hin abnimmt.

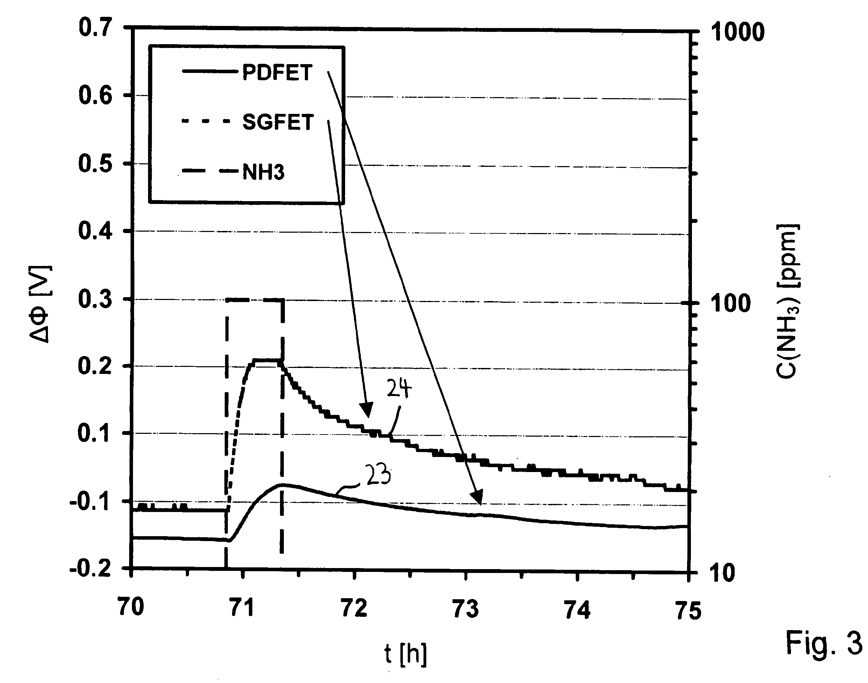

Fig. 3 zeigt die Messsignalverläufe der Gassensoren, wenn diese mit Ammoniakgas in Kontakt gebracht werden. Deutlich ist erkennbar, dass das Messsignal 23 des MOSFET 2 kleiner ist als das Messsignal 24 des SGFET 1. Der Quotient aus dem Messsignal 23 des MOSFET 2 und dem Messsignal 24 des SGFET 1 liegt nun etwa zwischen 2:1 und 3,3:1. Anhand des Quotienten aus den Messsignalen 23, 24 lässt sich also unterscheiden, ob die Gassensoren mit Wasserstoffgas oder einem anderen Gas in Kontakt stehen.

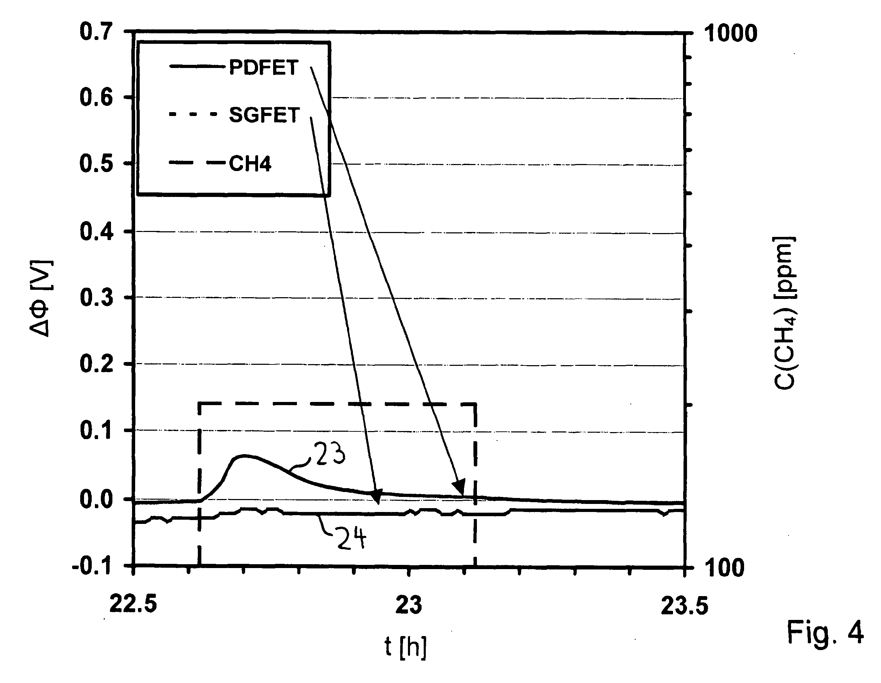

Fig. 4 zeigt die Messsignalverläufe der Gassensoren, wenn diese mit einem Kohlenwasserstoffgas, nämlich CH₄, in Kontakt gebracht werden. Dabei ist erkennbar, dass CH₄ im Wesentlichen nur das Messsignal 23 des MOSFET 2 verändert, während das Messsignal 24 des SGFET 1 praktisch keine Reaktion zeigt. Außerdem ist erkennbar, dass das Messsignal 23 des MOSFET 2 während des Kontakts mit der in einem vorgegebenen Zeitfenster konstanten CH₄-Konzentration zunächst bis zu einem Maximalwert ansteigt und dann auf einen Wert abfällt, der etwas größer ist als der Wert, den das Messsignal aufwies, bevor der MOSFET 2 mit dem CH₄-Gas in Kontakt gebracht wurde. Auch bei diesem Beispiel lässt sich anhand der Messsignale 23, 24 der Gassensoren ermitteln, dass diese nicht mit Wasserstoffgas in Kontakt stehen.

Die Vorrichtung zur Detektion eines Gases weist also mindestens einen als SGFET 1 ausgebildeten ersten Gassensor und zusätzlich dazu wenigstens einen als MOSFET 2 ausgebildeten zweiten Gassensor auf Die Gassensoren sind mit einer Auswerteeinrichtung verbunden, die derart ausgebildet ist, dass sie zur Detektion des Gases die Messsignale 23, 24 beider Arten von Gassensoren auswertet.

## Patentansprüche

1. Vorrichtung zur Detektion eines Gases oder Gasgemischs, die mindestens einen Gassensor aufweist, der als MOSFET (2) ausgebildet ist, der einen ersten Kanalbereich (9) hat, an den kapazitiv eine erste gassensitive Schicht (11) aus Palladium und/oder einer Palladium-Legierung gekoppelt ist, die mit einer Änderung ihrer Austrittsarbeit auf eine Änderung der Konzentration des zu detektierenden Gases reagiert, wobei die Vorrichtung zusätzlich zu dem MOSFET (2) wenigstens einen als SGFET (1) ausgebildeten zweiten Gassensor aufweist, der einen zweiten Kanalbereich (16) hat, dem eine an einem Suspended Gate (17) angeordnete zweite gassensitive Schicht (19) zugeordnet ist, die mit einer Änderung ihrer Austrittsarbeit auf eine Änderung der Konzentration des zu detektierenden Gases reagiert, und wobei der mindestens eine MOSFET (2) und der wenigstens eine SGFET (1) mit einer Auswerteeinrichtung verbunden sind, die derart ausgebildet ist, dass sie zur Detektion des Gases oder Gasgemischs die Messsignale (23, 24) beider Arten von Gassensoren auswertet.

2. Vorrichtung nach Anspruch 1, **dadurch gekennzeichnet, dass** der MOSFET (2) auf dem Substrat (3) eines Halbleiterchips (4) eine erste Drain (7) und eine erste Source (8) aufweist, zwischen denen der erste Kanalbereich (9) gebildet ist, dass die erste gassensitive Schicht (11) über eine dielektrische Schicht (10) kapazitiv an den ersten Kanalbereich (9) gekoppelt ist, dass der SGFET (1) auf dem Substrat (3) seitlich neben dem MOSFET (2) eine zweite Drain (14) und eine zweite Source (15) aufweist, zwischen denen der zweite Kanalbereich (16) gebildet ist, und über einen Luftspalt (21) kapazitiv an den zweiten Kanalbereich (16) gekoppelt ist.

3. Vorrichtung nach Anspruch 1 oder 2, **dadurch gekennzeichnet, dass** zumindest die zweite Drain (14), die zweite Source (15) der zweite Kanalbereich (16) und die Gate-Elektrode (17) des mindestens einen SGFET (1), der wenigstens eine MOSFET (2) und gegebenenfalls die Auswerteeinrichtung auf demselben Halbleiterchip (4) integriert sind.

4. Vorrichtung nach einem der Ansprüche 1 bis 3, **dadurch gekennzeichnet, dass** die zweite gassensitive Schicht (19) aus Palladium und/oder Platin und/oder einer mindestens eines dieser Metalle enthaltenden Legierung besteht.

5. Vorrichtung nach einem der Ansprüche 1 bis 4, **dadurch gekennzeichnet, dass** das Suspended Gate (18) seitlich bis über den MOSFET (2) verlängert ist und diesen vorzugsweise vollständig überdeckt.

6. Vorrichtung nach einem der Ansprüche 1 bis 5, **dadurch gekennzeichnet, dass** mit der Auswerteeinrichtung mindestens ein vorzugsweise auf dem Halbleiterchip (4) integriertes elektrisches Widerstandselement verbunden ist, das aus einem Werkstoff besteht, dessen elektrischer Widerstandswert von der Wasserstoffgaskonzentration abhängig ist, und dass die Auswerteeinrichtung derart ausgebildet ist, dass sie zur Detektion des Wasserstoffgases ein Messsignal des Widerstandselements auswertet.

7. Vorrichtung nach einem der Ansprüche 1 bis 6, **dadurch gekennzeichnet, dass** auf dem Halbleiterchip (4) eine elektrische Heizung integriert ist.

8. Vorrichtung nach einem der Ansprüche 1 bis 7, **dadurch gekennzeichnet, dass** das Substrat (3) vorzugsweise an seiner den gassensitiven Schichten (11, 19) abgewandten Rückseite mindestens eine vorzugsweise grabenförmige Vertiefung aufweist, die derart relativ zu der Heizung angeordnet ist, dass sie die Wärmeableitung von der Heizung in seitlicher Richtung reduziert.

9. Vorrichtung nach einem der Ansprüche 1 bis 8, **dadurch gekennzeichnet, dass** in den Halbleiterchip (4) ein mit der Auswerteeinrichtung verbundener Temperatursensor integriert ist, und dass die Auswerteeinrichtung derart ausgebildet ist, dass die Gasdetektion in Abhängigkeit von dem Messsignal des Temperatursensors erfolgt.

10. Vorrichtung nach einem der Ansprüche 1 bis 9, **dadurch gekennzeichnet, dass** die Auswerteeinrichtung derart ausgebildet ist, dass sie ein Differenzsignal und/oder ein Summensignal aus den Messsignalen (23, 24) der beiden Arten von Gassensoren bildet, und dass die Gasdetektion in Abhängigkeit von dem Differenz- und/oder Summensignal erfolgt.

11. Vorrichtung nach einem der Ansprüche 1 bis 10, **dadurch gekennzeichnet, dass** die Auswerteeinrichtung derart ausgebildet ist, dass die Gasdetektion in Abhängigkeit von dem Vorzeichen und/oder dem Betrag des Differentialsignals erfolgt.

12. Vorrichtung nach einem der Ansprüche 1 bis 11, **dadurch gekennzeichnet, dass** die Auswerteeinrichtung derart ausgebildet ist, dass sie ein Quotientensignal aus den Messsignalen (23, 24) der beiden Arten von Gassensoren bildet, und dass die Gasdetektion in Abhängigkeit von dem Quotientensignal erfolgt.

13. Vorrichtung nach einem der Ansprüche 1 bis 12, **dadurch gekennzeichnet, dass** sie mit Hilfe einer Schalteinrichtung zwischen einem Arbeitszustand und einem Energiesparzustand umschaltbar ist, dass im Energiesparzustand die Heizung und gegebenenfalls der MOSFET (2) ausgeschaltet sind, und dass die Auswerteeinrichtung derart ausgebildet ist, dass sie im Energiesparzustand zur Detektion des Gases vorzugsweise nur das Messsignal (24) des SGFET (1) auswertet.

14. Vorrichtung nach dem Anspruch 13, **dadurch gekennzeichnet, dass** die Schalteinrichtung derart ausgebildet ist, dass sie von dem Arbeitszustand in den Energiesparzustand umschaltet, wenn die gemessene Gaskonzentration einen vorgegebenen Vergleichswert überschreitet, und dass die Schalteinrichtung gegebenenfalls von dem Energiesparzustand in den Arbeitszustand zurückschaltet, wenn die gemessene Gaskonzentration den vorgegebenen Vergleichswert unterschreitet.

15. Vorrichtung nach einem der Ansprüche 13 oder 14, **dadurch gekennzeichnet, dass** die Auswerteeinrichtung mit der Schalteinrichtung derart in Steuerverbindung steht, dass sie im Energiesparzustand beim Auftreten eines für die Anwesenheit des zu detektierenden Gases typischen Messsignalabschnitts in dem Messsignal (24) des SGFET (1) die Schalteinrichtung in den Arbeitszustand umschaltet und gegebenenfalls, falls kein solcher Messsignalabschnitt mehr detektiert wird, die.Schalteinrichtung in den Energiesparzustand zurückschaltet.

16. Verfahren zum Betreiben einer Vorrichtung nach einem der Ansprüche 1 bis 15 in einer gasbetriebenen Energieerzeugungseinrichtung zur Bereitstellung von elektrischer und/oder mechanischer Energie, beispielsweise einer Brennstoffzelle und/oder einem Kraftfahrzeug, wobei die Energieerzeugungseinrichtung in einen ersten Betriebszustand, in dem die elektrische und/oder mechanische Energie erzeugt wird, und einen zweiten Betriebszustand, in dem die Energieerzeugung ausgeschaltet ist, gebracht wird, und wobei die Vorrichtung in Abhängigkeit vom Betriebszustand der Energieerzeugungseinrichtung zwischen dem Arbeitszustand und dem Energiesparzustand umschaltet wird.

## Claims

1. Device for detecting a gas or a gas mixture, which has at least one gas sensor, formed as a MOSFET (2) having a first channel domain (9), to which is capacitively coupled a first gas-sensitive layer (11) composed of palladium and/or a palladium alloy, which responds with a change in its work function when there is a change in the concentration of the gas to be detected, the device having, in addition to the MOSFET (2), at least one second gas sensor formed as an SGFET (1) and having a second channel domain (16), to which is assigned a second gas-sensitive layer (19) which is arranged on a suspended gate (17) and responds with a change in its work function when there is a change in the concentration of the gas to be detected, and the at least one MOSFET (2) and the at least one SGFET (1) being connected to an analyzing device, which is configured in such a way that it analyzes the measurement signals (23, 24) of both kinds of gas sensors in order to detect the gas or gas mixture.

2. Device according to Claim 1, **characterized in that** the MOSFET (2) on the substrate (3) of a semiconductor chip (4) has a first drain (7) and a first source (8), between which there is formed the first channel domain (9), **in that** the first gas-sensitive layer (11) is capacitively coupled via a dielectric layer (10) to the first channel domain (9), **in that** the SGFET (1) has upon the substrate (3) laterally next to the MOSFET (2) a second drain (14) and a second source (15), between which there is formed the second channel domain (16), and is capacitively coupled via an air gap (21) to the second channel domain (16).

3. Device according to Claim 1 or 2, **characterized in that** at least the second drain (14), the second source (15), the second channel domain (16) and the gate electrode (17) of the at least one SGFET (1), the at least one MOSFET (2) and, if need be, the analyzing device are integrated on the same semiconductor chip (4).

4. Device according to one of Claims 1 to 3, **characterized in that** the second gas-sensitive layer (19) consists of palladium and/or platinum and/or an alloy containing at least one of these metals.

5. Device according to one of Claims 1 to 4, **characterized in that** the suspended gate (18) is laterally extended up to across the MOSFET (2), and preferably covers it completely.

6. Device according to one of Claims 1 to 5, **characterized in that** at least one electrical resistance element integrated preferably on the semiconductor chip (4) is connected to the analyzing device, which element consists of a material whose electrical resistance value is a function of the concentration of hydrogen gas and **in that** the analyzing device is configured in such a way that it analyzes a measurement signal of the resistance element to detect the hydrogen gas.

7. Device according to one of Claims 1 to 6, **characterized in that** an electrical heating element is integrated on the semiconductor chip (4).

8. Device according to one of Claims 1 to 7, **characterized in that** the substrate (3) preferably has on its rear side oriented away from the gas-sensitive layers (11, 19) at least one preferably trench-shaped depression, which is arranged relative to the heating element in such a way that it reduces the lateral conduction of the heat from the heating element.

9. Device according to one of Claims 1 to 8, **characterized in that** the semiconductor chip (4) has integrated into it a temperature sensor connected to the analyzing device, and **in that** the analyzing device is so configured that the gas detection is carried out as a function of the temperature sensor measurement signal.

10. Device according to one of Claims 1 to 9, **characterized in that** the analyzing device is so configured that it generates a differential signal and/or a sum signal from the measurement signals (23,24) of both kinds of gas sensors, and **in that** the gas detection is carried out as a function of the differential and/or sum signal.

11. Device according to one of Claims 1 to 10, **characterized in that** the analyzing device is configured in such a way that the detection of gas is carried out as a function of the polarity and/or the magnitude of the differential signal.

12. Device according to one of Claims 1 to 11, **characterized in that** the analyzing device is so configured that it generates a quotient signal from the measurement signals (23, 24) of both kinds of gas sensors, and **in that** the detection of gas occurs as a function of the quotient signal.

13. Device according to one of Claims 1 to 12, **characterized in that**, with the help of a switching device, it can be switched back and forth between an operational mode and a powersaving mode, **in that** in the powersaving mode the heating element and, if appropriate, the MOSFET (2) are switched off, and **in that** the analyzing device is so configured that during the powersaving mode, it preferentially analyzes only the measurement signal (24) of the SGFET (1) to detect the gas.

14. Device according to Claim 13, **characterized in that** the switching device is so configured that it switches from operational to the powersaving mode when the measured concentration of gas exceeds a given comparison value, and **in that** if appropriate the switching device switches back from the powersaving mode to the operational mode, when the measured concentration of gas falls below the given comparison value.

15. Device according to either of Claims 13 and 14, **characterized in that** the analyzing device is control-connected to the switching device in such a way that, in the powersaving mode, when a section of the measurement signal typical for the presence of the gas to be detected occurs in the measurement signal (24) of the SGFET (1), said analyzing device switches the switching device to the operational mode, and, if appropriate, if such a measurement signal section is no longer detected, switches said switching device back to the powersaving mode.

16. Method for operating a device according to one of Claims 1 to 15 in an energy producing machine fuelled by gas and used for the production of electrical and/or mechanical energy, for example a fuel cell and/or a motor vehicle, wherein the energy producing machine is put into a first mode of operation to produce electrical and/or mechanical energy, and is then put into a second mode of operation in which the energy production is switched off, and wherein the device is switched between the operational and the powersaving mode as a function of the operating mode of the energy producing machine.

## Revendications

1. Dispositif de détection d'un gaz ou d'un mélange gazeux, comportant au moins un capteur de gaz de conception de type MOSFET (2) ayant une première zone de conduit (9) auquel est accouplée de façon capacitive une première couche sensible aux gaz (11) en palladium et/ou en un alliage de palladium, qui par une modification de son travail de sortie réagit à une modification de la concentration du gaz à détecter, le dispositif ayant en supplément du MOSFET (2) au moins un deuxième capteur de gaz de conception de type SGFET (1), qui a une deuxième zone de conduit (16) à laquelle est associée une deuxième couche (19) sensible aux gaz disposée sur un Suspended Gate (17), qui par une modification de son travail de sortie, réagit à une modification de la concentration du gaz à détecter, et le au moins un MOSFET (2) et le au moins un SGFET (1) étant reliés avec un dispositif d'évaluation, qui est conçu de manière à évaluer, en vue de la détection du gaz ou du mélange gazeux, les signaux de mesure (23, 24) des deux types de capteurs de gaz (23, 24).

2. Dispositif selon la revendication 1, **caractérisé en ce que** le MOSFET (2) comporte sur le substrat (3) d'une puce à semi-conducteur (4) un premier drain (7) et une première source (8), entre lesquels est formée la première zone de conduit (9), **en ce que** la première couche sensible aux gaz (11) est accouplée par l'intermédiaire d'une couche diélectrique (10) de façon capacitive sur la première zone de conduit (9), **en ce que** le SGFET (1) comporte sur le substrat (3), latéralement du MOSFET (2) un deuxième drain (14) et une deuxième source (15), entre lesquels est formée la deuxième zone de conduit (16) et est accouplé de façon capacitive sur la deuxième zone de conduit (16), par l'intermédiaire d'une fente d'aération (21).

3. Dispositif selon la revendication 1 ou 2, **caractérisé en ce que** au moins le deuxième drain (14), la deuxième source (15), la deuxième zone de conduit (16) et l'électrode grille (17) du au moins un SGFET (1), le au moins un MOSFET (2) et le cas échéant, le dispositif d'évaluation sont intégrés sur la même puce à semi-conducteur (4).

4. Dispositif selon l'une quelconque des revendications 1 à 3, **caractérisé en ce que** la deuxième couche sensible aux gaz (19) est constituée de palladium et/ou de platine et/ou d'un alliage contenant au moins l'un de ces métaux.

5. Dispositif selon l'une quelconque des revendications 1 à 4, **caractérisé en ce que** le Suspended Gate (18) est latéralement prolongé jusque par-dessus le MOSFET (2) et recouvre de préférence totalement ce dernier.

6. Dispositif selon l'une quelconque des revendications 1 à 5, **caractérisé en ce que** au moins un élément de résistance électrique intégré de préférence sur la puce à semi-conducteur (4) qui est en une matière, dont la valeur de résistance électrique dépend de la concentration du gaz hydrogène est relié au dispositif d'évaluation et que le dispositif d'évaluation est conçu de manière à évaluer un signal de mesure de l'élément de résistance, pour la détection du gaz hydrogène.

7. Dispositif selon l'une quelconque des revendications 1 à 6, **caractérisé en ce qu'**un chauffage électrique est intégré sur la puce à semi-conducteur (4).

8. Dispositif selon l'une quelconque des revendications 1 à 7, **caractérisé en ce que** le substrat (3) comporte, de préférence sur sa face arrière opposée aux couches sensibles aux gaz (11, 19), au moins un creux, de préférence en forme de tranchée, qui est disposé par rapport au chauffage de manière à réduire la dissipation de chaleur du chauffage en direction latérale.

9. Dispositif selon l'une quelconque des revendications 1 à 8, **caractérisé en ce que** dans la puce à semi-conducteur (4) est intégré un capteur thermique relié au dispositif d'évaluation, et que le dispositif d'évaluation est conçu de telle sorte que la détection de gaz soit effectuée en fonction du signal de mesure du capteur thermique.

10. Dispositif selon l'une quelconque des revendications 1 à 9, **caractérisé en ce que** le dispositif d'évaluation est conçu de manière à former à partir des signaux de mesure (23, 24) des deux types de capteurs de gaz un signal différentiel et/ou un signal additif et que la détection de gaz soit effectuée en fonction du signal différentiel et/ou du signal additif.

11. Dispositif selon l'une quelconque des revendications 1 à 10, **caractérisé en ce que** le dispositif d'évaluation est conçu de manière à ce que la détection de gaz soit effectuée en fonction du signe précédant le signal différentiel et/ou de sa valeur.

12. Dispositif selon l'une quelconque des revendications 1 à 11, **caractérisé en ce que** le dispositif d'évaluation est conçu de manière à former à partir des signaux de mesure (23, 24) des deux types de capteurs de gaz un signal de quotient et ce que la détection de gaz soit effectuée en fonction du signal de quotient.

13. Dispositif selon l'une quelconque des revendications 1 à 12, **caractérisé en ce que**, à l'aide d'un dispositif de commutation, il est commutable entre une position de travail et une position d'économie d'énergie, **en ce que** dans la position d'économie d'énergie, le chauffage et le cas échéant le MOSFET (2) sont hors circuit et **en ce que** le dispositif d'évaluation est conçu de manière à ce que, dans la position d'économie d'énergie, il n'évalue de préférence que le signal de mesure (24) du SGFET (1), pour la détection du gaz.

14. Dispositif selon la revendication 13, **caractérisé en ce que** le dispositif de commutation est conçu de manière à commuter de la position de travail dans la position d'économie d'énergie, lorsque la concentration de gaz mesurée dépasse la valeur de comparaison prédéfinie et **en ce que** le dispositif de commutation repasse le cas échéant de la position d'économie d'énergie à la position de travail, lorsque la concentration de gaz mesurée n'atteint pas la valeur de comparaison prédéfinie.

15. Dispositif selon l'une quelconque des revendications 13 ou 14, **caractérisé en ce que** le dispositif d'évaluation est en liaison de commande avec le dispositif de commutation, de manière à ce que dans la position d'économie d'énergie, à l'apparition d'une partie de signal de mesure typique pour la présence du gaz à détecter dans le signal de mesure (24) du SGFET (1), il commute le dispositif de commutation en position de travail et le cas échéant, si aucune partie de signal de mesure de ce type n'est plus détectée, il recommute le dispositif de commutation en position d'économie d'énergie.

16. Procédé pour faire fonctionner un dispositif selon l'une quelconque des revendications 1 à 15 dans un dispositif de génération d'énergie fonctionnant au gaz, pour la fourniture d'énergie électrique et/ou mécanique, par exemple d'une cellule de combustible et/ou d'un véhicule automobile, le dispositif de génération d'énergie étant amené dans un premier état de marche, dans lequel l'énergie électrique et/ou mécanique est générée et dans un deuxième état de marche, dans lequel la génération d'énergie est arrêtée et le dispositif étant commuté entre la position de travail et la position d'économie d'énergie, en fonction de l'état de marche du dispositif de génération d'énergie.
